# EUROPEAN PATENT SPECIFICATION

(11) **EP 0 720 080 B1**
(45) Date of publication and mention of the grant of the patent: **24.03.1999**
(21) Application number: 95120550.9
(22) Date of filing: 27.12.1995
(51) Int. Cl.: G05G 1/14, B60K 23/00, B62D 1/19, B62D 25/14

(54) **A motor vehicle pedal unit**
Pedaleinheit eines Kraftfahrzeugs
Ensemble de pédales pour véhicule à moteur

(30) Priority: 29.12.1994 IT TO941087
(43) Date of publication of application: 03.07.1996
(73) Proprietor: ERGOM MATERIE PLASTICHE S.p.A, I-10071 Borgaro Torinese (Torino) (IT)
(72) Inventor: Cimminelli , Francesco, I-10143 Torino (IT)
(74) Representative: Rambelli, Paolo

(56) References cited:
- EP-A- 0 430 600
- EP-A- 0 431 986
- EP-A- 0 561 403
- DE-A- 2 027 828
- DE-A- 3 923 852
- FR-A- 2 101 438
- GB-A- 2 187 144

## Description

The present invention relates to a pedal unit for a motor vehicle, comprising a supporting base from which projects an elongate structure which can receive at least part of the steering column of the motor vehicle, the elongate structure including a connecting portion adjacent the base for supporting an articulation pin for at least one of the pedals, wherein the base and the elongate structure are made integrally from plactics material.

In known pedal units, the supporting base and the elongate structure are often made from a number of shaped, sheet-metal elements fixed to one another, for example by welding, so that the units obtained, normally already provided with associated pedals and other accessories, may easily be mounted in a motor vehicle during its assembly. Indeed, because of the restricted space available within the passenger compartments of motor vehicles, it is not easy to mount the various components of the pedal units during their assembly on the vehicle.

However, known pedal units have several disadvantages due mainly to the fact that they are made up of a large number of parts which require relatively complicated operations to shape and fix them together, whereby these units are expensive to manufacture overall. Moreover they are generally heavy and must be given protective treatments after assembly to coat them with layers of anti-corrosion materials and paint to protect them from external agents and make them aesthetically pleasing.

A pedal unit of the type defined at the beginning of the description and comprising all features of the preamble of claim 1, is known from EP-A-431 986. This pedal unit has the elongate structure connected to the peripheral edge of the supporting base.

The present invention provides a pedal unit of the type indicated above, characterised in that the elongate structure projects from a subtantially central portion of the base.

By virtue of its characteristics, the unit according to the invention is particularly economical since it does not require parts to be fixed together, nor anti-corrosion treatments nor painting, and is also light and reliable and has good structural rigidity.

Conveniently the plastics material used is a fibre-reinforced thermoplastics polymer and the unit is made by a moulding process.

Thus the unit according to the invention is distinguished by having good resistance to thermal stress an to static and dynamic mechanical stress, as well as being aesthetically pleasing so that it can be assembled immediately after moulding without requiring any surface treatment.

Preferably the thermoplastics polymer is a polyamide 6 or 66 and the reinforcing fibres are class fibres which constitute 30 to 50% by weight.

Further characteristics and advantages of the invention will become clearer from the detailed description which follows, given with reference to the appended drawings, provided purely by way of non-limitative example, in which:

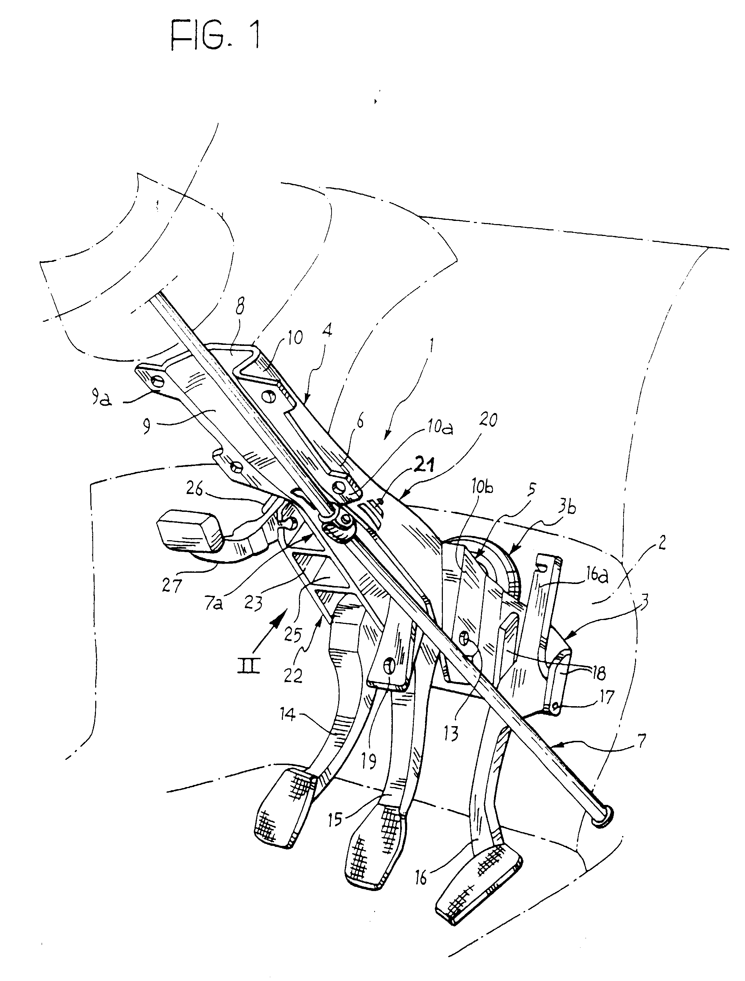

Figure 1 is a perspective view of a pedal unit according to the invention,

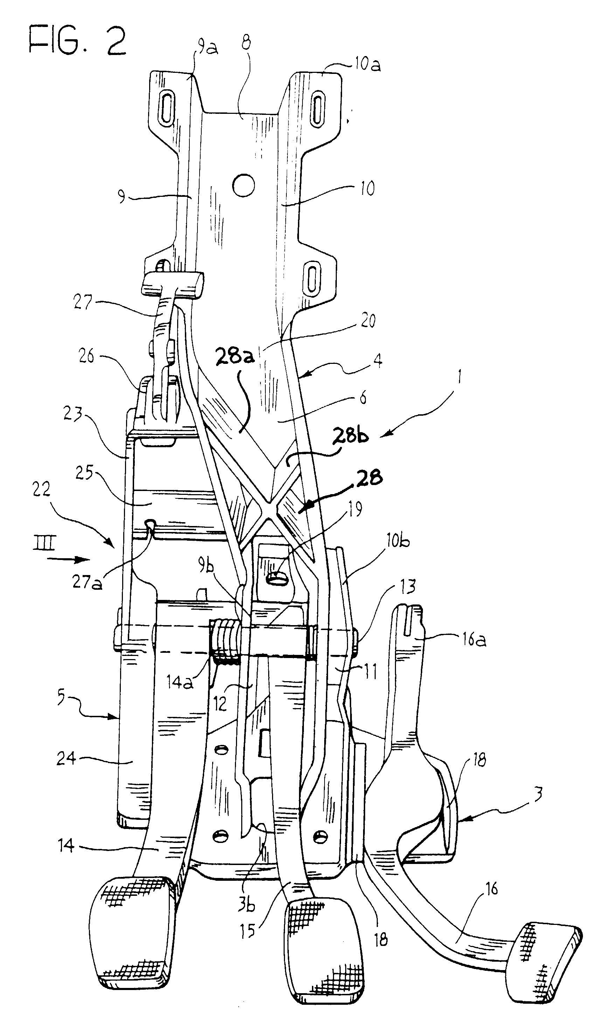

Figure 2 is a front elevational view of the unit of Figure 1 taken in the direction of the arrow II,

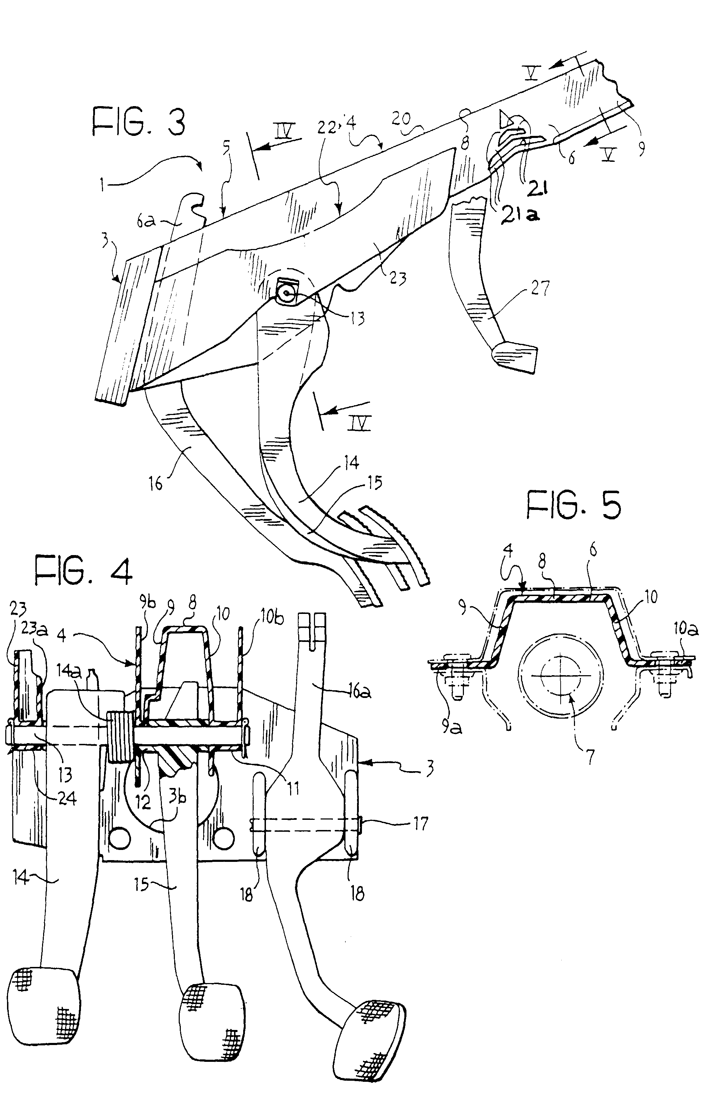

Figure 3 is a side elevational view taken in the direction of the arrow III of Figure 2,
Figure 4 is a sectional view taken on the line IV-IV of Figure 3, and
Figure 5 is a sectional view taken on the line V-V of Figure 3.

With reference to the drawings, a plastics pedal unit is generally indicated 1 and is intended to be mounted on the body of a motor vehicle, in the driving position, during the assembly of the motor vehicle.

The unit 1 includes a supporting base plate 3 intended to be mounted in known manner close to an aperture in a partition 2 which divides the passenger compartment from the engine compartment of the motor vehicle.

An elongate structure 4 projects from the base plate 3 and is integral or monolithic therewith and connected to the plate 3 by means of a connecting portion 5. More particularly, the elongate structure 4 is constituted by a profiled part 6 of generally U-shaped cross-section defining a channel-shaped seat for receiving at least part of the steering column 7 when the unit is assembled in the motor vehicle.

The profiled part 6 includes a dorsal wall 8 which is substantially flat and a pair of opposing side walls 9 and 10, each of which has respective attachment flanges 9a and 10a.

Adjacent the connecting portion 5, the side walls 9 and 10 have parallel reinforcing side members 9b and 10b connected to the walls 9 and 10 by respective base walls 11 and 12 so as to form box stirrup structures which are open on their sides facing the dorsal wall 8. The walls 9 and 10 and the side members 9b and 10b are traversed by a transverse pin 13 about which a clutch pedal 14 and a brake pedal 15 are articulated. The clutch pedal 14 is urged towards a predetermined rest position by means of a helical pin spring 14a.

An accelerator pedal 16 is articulated directly on the plate 3 by means of a pin 17 which passes through a pair of lugs 18 formed integrally with the plate 3 and projecting from the latter on the same side as the other pedals. The pedal 16 also has an appendage 16a for connection to one end of a transmission element (not illustrated) associated with control members for the motor-vehicle engine.

The base plate 3 has a substantially central hole 3a in correspondence with the brake pedal 15 for engagement by a part 3b of a servo-brake system of known type whilst a bracket 19 is supported between the walls 9 and 10 on the opposite side of the plate 3 from the pedal 15 and has an aperture for the anchorage of a push button switch (not shown in the drawings) for indicating the actuation of the brake pedal 15.

Conveniently, the pedals 14, 15 and 16 are all made from plastics material and have respective substantially flat front and side walls while they are hollow towards the rear and stiffened by grids of flat elements which interconnect the side and front walls of each pedal.

The elongate member 4 has weakening means in its substantially central region defining a zone 20 which can collapse in the event of a frontal collision of the motor vehicle. A collapsable articulation joint 7a for the steering column 7 is intended to be fitted in this region so that the steering column 7 reacts to combined bending and compressive stress at the front of the motor vehicle by bending at the articulation joint 7a while the structure 4 may also deform locally in its collapsable zone 20.

More particularly, in the collapsable zone 20, the walls 9 and 10 have respective series of substantially parallel V-shaped slots 21 with their vertices facing the dorsal wall 8. The slots 21 preferably increase in length from the dorsal wall 8 towards the edges of the side walls 9 and 10 opposite the dorsal wall 8. Thus, in the collapsable zone 20, the side walls 9 and 10 are formed essentially by a plurality of angled parallel strips 21a which are elongate in the direction of extent of the structure 4.

Alongside the profiled portion 6 the elongate structure 4 includes an auxiliary open structure 22 including an upright 23 formed integrally with the plate 3 and with the part 6 and extending substantially parallel to the part 6, the upright being connected to the wall 9 close to the collapsable zone 20 at that end closer to the plate 3. At least one transverse plate 25 connects the upright 23 to the side wall 9, helping to make the entire unit more rigid.

Like the side walls 9 and 10 and the side members 9b and 10b, the upright 23 also has a parallel reinforcing side member 23a alongside its portion connected to the base 3.

An end wall 24 connects the upright 23 to the side member 23a so as to define an auxiliary box stirrup structure which is open at its side facing the dorsal wall 8. The upright 23 and the side member 23a are also traversed by the articulation pin 13.

A lever 27 is articulated to the upright 23 at 26 close to that end thereof opposite the base plate 3, the lever 27 being provided for operating a release mechanism for unlocking the front bonnet of the motor vehicle by means of a flexible transmission element (not illustrated in the drawings) adapted to engage a reference hole 27a formed in the plate 25.

Within the channel-shaped profile part 6 is a stiffening element 28 which comprises a pair of plates 28a and 28b arranged in an X configuration, both perpendicular to the dorsal wall 8 and connected to the side walls 9 and 10. The element 28 is formed integrally with the walls 8, 9 and 10 in a zone intermediate the collapsable zone 20 and the base plate 3, particularly close to the part connecting the upright 23 to the wall 9.

As stated above, the unit according to the invention is preferably made by moulding from plastics material containing reinforcing fibres. Preferably a matrix of thermoplastics material, for example polyamide 6 or 66, is used with strong fibres, for example glass fibres, included in a proportion of 30 to 50% by weight.

## Claims

1. A pedal unit for a motor vehicle, comprising a supporting base (3) from which projects an elongate structure (4) which can receive at least part of the steering column (7) of the motor vehicle, the elongate structure (4) including a connecting portion (5) adjacent the base for supporting an articulation pin (13) for at least one of the pedals (14, 15, 16), wherein the base (3) and the elongate structure (4) are made integrally from plastics material,
characterised in that the elongate structure (4) projects from a substantially central portion of the base (3).

2. A pedal unit according to Claim 1, characterised in that the plastics material is a fibre-reinforced thermoplastics polymer and the unit is made by a moulding process.

3. A pedal unit according to Claim 2, characterised in that the thermoplastics polymer is polyamide 6 or 66 and the reinforcing fibres are glass fibres constituting 30-50% by weight.

4. A pedal unit according to Claim 1, characterised in that the elongate structure (4) includes a profiled part (6) of U-shaped cross-section which defines a channel-shaped seat for the part of the steering column (7).

5. A pedal unit acccording to Claim 4, characterised in that the profiled part (6) includes a pair of side walls (9, 10) connected together by a substantially flat dorsal wall (8).

6. A pedal unit according to Claim 5, characterised in that the side walls have integral attachment flanges (9a, 10a).

7. A pedal unit according to Claim 6, characterised in that it includes a brake pedal (15) interposed between a clutch pedal (14) and an accelerator pedal (16), the side walls (9, 10) of the profiled part (6) being connected to a pair of reinforcing side members (9b, 10b) and base walls (11, 12) so as to form a pair of main box stirrup structures close to the connecting portion (5) for supporting an articulation pin (13) for the brake pedal (15).

8. A pedal unit according to Claim 7, characterised in that the base (3) has a through-hole (3b) in correspondence with the brake pedal (15) for engagement by a part of a servo-brake device.

9. A pedal unit according to Claim 7 or Claim 8, characterised in that an auxiliary structure (22) integral with the base (3) and with a side wall (9) of the profiled part (6) extends alongside the profiled part (6), the auxiliary structure constituting an auxiliary box stirrup structure (23, 23a, 24) close to the connecting portion (5) for supporting one end of the articulation pin (13) for the brake pedal (15).

10. A pedal unit according to Claim 9, characterised in that the auxiliary structure (22) is an open structure which includes a side upright (23) fixed at one end to the base (3) and connected at its opposite end to the profiled part (6) of the elongate structure (4) and at least one intermediate transverse plate (25).

11. A pedal unit according to Claim 10, characterised in that the auxiliary structure (22) supports an operating member (27) connected by transmission means to a release mechanism for unlocking the front bonnet of the motor vehicle.

12. A pedal unit according to Claim 11, characterised in that the operating member is a pivotable lever (27) articulated to the side upright (23) of the auxiliary structure (22).

13. A pedal unit according to Claim 9 or Claim 10, characterised in that both the clutch pedal and the brake pedal (14, 15) are articulated on a common articulation pin (13) supported by the main and auxiliary stirrup support structures (9, 9b, 12, 10, 10b, 23, 23a, 24).

14. A pedal unit according to Claim 13, characterised in that each of the main and auxiliary stirrup support structures (9, 9b, 12, 10, 10b, 23, 23a, 24) is made by means to a box structure open on its side opposite the dorsal wall (8).

15. A pedal unit according to Claim 13 or Claim 14, characterised in that the base (3) further includes a pair of integral lugs (18) for the articulated connection of the accelerator pedal (16).

16. A pedal unit according to Claim 6, characterised in that the elongane structure (4) has a portion provided with weakening means (21) for defining a collapsable zone (20) in correspondence with which there is intended to be located a collapsable articulation joint (7a) for the steering column (7).

17. A pedal unit according to Claim 16, characterised in that the upright (23) of the auxiliary structure (22) is connected to the profiled part (6) between the base (3) and the collapsable zone (20).

18. A pedal unit according to Claim 16 or Claim 17, characterised in that the weakening means comprise at least one aperture (21) formed in both side walls (9, 10) of the profiled part (6).

19. A pedal unit according to Claim 18, characterised in that the weakening means are formed by means of a series of substantially parallel slots (21) formed in both side walls (9, 10) of the profiled part (6), these slots (21) increasing in length from the dorsal wall (8) of the profiled part (6) towards those edges of the side walls (9, 10) opposite the dorsal wall (8).

20. A pedal unit according to Claim 19, characterised in that the slots (21) are substantially V-shaped with the vertex facing the dorsal wall (8) of the profiled part (6) so that, in the collapsable zone (20), the side walls (9, 10) of the profiled part (6) are defined by a plurality of mutually-spaced angled strips (21a).

21. A pedal unit according to Claim 9, characterised in that a portion of the profiled part (6) intermediate the base (3) and the collapsable zone (20) is provided with an integral stiffening element (28).

22. A pedal unit according to Claim 21, characterised in that the stiffening element (28) comprises two plates (28a, 28b) located in an X-configuration, both perpendicular to the dorsal wall (8) of the profiled part (6).

## Patentansprüche

1. Pedaleinheit für ein Kraftfahrzeug, die eine Montagebasis (3) besitzt, von der ein länglicher Aufbau (4) vorspringt, der zumindest einen Teil der Lenksäule (7) des Kraftfahrzeugs aufnehmen kann, wobei der längliche Aufbau (4) einen Verbindungsteil (5) neben der Basis aufweist, um einen Gelenkszapfen (13) für zumindest eines der Pedale (14, 15, 16) aufzunehmen, wobei die Basis (3) und der längliche Aufbau (4) gemeinsam aus Kunststoff hergestellt werden,
dadurch gekennzeichnet, dass der längliche Aufbau (4) von einem im wesentlichen mittigen Teil der Basis (3) vorspringt.

2. Pedaleinheit gemäß Anspruch 1, dadurch gekennzeichnet, dass der Kunststoff ein faserverstärktes, thermoplastisches Polymer ist, und dass die Einheit in einem Pressvorgang hergestellt wird.

3. Pedaleinheit gemäß Anspruch 2, dadurch gekennzeichnet, dass das thermoplastische Polymer Polyamid 6 oder 66 ist, und dass die verstärkenden Fasern Glasfasern sind, die 30 bis 50 Gewichtsprozente betragen.

4. Pedaleinheit gemäß Anspruch 1, dadurch gekennzeichnet, dass der längliche Aufbau (4) einen Profilteil (6) mit einem U-förmigen Querschnitt aufweist, der einen kanalartigen Sitz für den Teil der Lenksäule (7) bildet.

5. Pedaleinheit gemäß Anspruch 4, dadurch gekennzeichnet, dass der Profilteil (6) ein Paar von Seitenwänden (9, 10) aufweist, die miteinander über eine im wesentlichen flache Rückwand (8) verbunden sind.

6. Pedaleinheit gemäß Anspruch 5, dadurch gekennzeichnet, dass die Seitenwände gemeinsam aufgebaute Befestigungsflansche (9a, 10a) besitzen.

7. Pedaleinheit gemäß Anspruch 6, dadurch gekennzeichnet, dass sie ein Bremspedal (15) aufweist, das zwischen einem Kupplungspedal (14) und einem Gaspedal (16) liegt, wobei die Seitenwände (9, 10) des Profilteils (6) mit einem Paar von verstärkenden Seitenelementen (9b, 10b) sowie Basiswänden (11, 12) verbunden sind, um ein Paar von schachtelartigen Hauptbügelaufbauten in der Nähe des Verbindungsteils (5) zu bilden, um einen Gelenkszapfen (13) für das Bremspedal (15) aufzunehmen.

8. Pedaleinheit gemäß Anspruch 7, dadurch gekennzeichnet, dass die Basis (3) in Übereinstimmung mit dem Bremspedal (15) eine Durchgangsöffnung (3b) besitzt, um in einen Teil einer Servobremsvorrichtung einzugreifen.

9. Pedaleinheit gemäß Anspruch 7 oder 8, dadurch gekennzeichnet, dass ein Hilfsaufbau (22), der gemeinsam mit der Basis (3) und einer Seitenwand (9) des Profilteils (8) ausgebildet ist, entlang des Profilteils (6) verläuft, wobei der Hilfsaufbau einen schachtelartigen Hilfsbügelaufbau (23, 23a, 24) in der Nähe des Verbindungsteils (5) bildet, um ein Ende des Gelenkszapfens (13) für das Bremspedal (15) aufzunehmen.

10. Pedaleinheit gemäß Anspruch 9, dadurch gekennzeichnet, dass der Hilfsaufbau (22) ein offener Aufbau ist, der eine Seitenstütze (23) aufweist, die an einem Ende an der Basis (3) befestigt und an ihrem gegenüberliegenden Ende mit dem Profilteil (6) des länglichen Aufbaus (4) sowie mit zumindest einer dazwischenliegenden Querplatte (25) verbunden ist.

11. Pedaleinheit gemäß Anspruch 10, dadurch gekennzeichnet, dass der Hilfsaufbau (22) ein Betätigungselement (27) trägt, das über eine Übertragungseinrichtung mit einem Freigabemechanismus verbunden ist, um die vordere Haube des Kraftfahrzeugs zu entriegeln.

12. Pedaleinheit gemäß Anspruch 11, dadurch gekennzeichnet, dass das Betätigungselement ein schwenkbarer Hebel (27) ist, der in der Seitenstütze (23) des Hilfsaufbaus (22) gelenkig gelagert ist.

13. Pedaleinheit gemäß Anspruch 9 oder 10, dadurch gekennzeichnet, dass sowohl das Kupplungspedal als auch das Bremspedal (14, 15) auf einem gemeinsamen Gelenkszapfen (13) gelenkig gelagert sind, der im Haupt- und Hilfsbügelaufbau (9, 9b, 12, 10, 10b, 23, 23a, 24) aufgenommen wird.

14. Pedaleinheit gemäß Anspruch 13, dadurch gekennzeichnet, dass sowohl der Haupt- als auch der Hilfsbügelaufbau (9, 9b, 12, 10, 10b, 23, 23a, 24) aus einem schachtelartigen Aufbau besteht, der an der Seite gegenüber der Rückwand (8) offen ist.

15. Pedaleinheit gemäß Anspruch 13 oder 14, dadurch gekennzeichnet, dass die Basis (3) weiters ein Paar von gemeinsam aufgebauten Laschen (18) für die Gelenksverbindung mit dem Gaspedal (16) aufweist.

16. Pedaleinheit gemäß Anspruch 6, dadurch gekennzeichnet, dass der längliche Aufbau (4) einen Teil besitzt, der mit einer Abschwächeinrichtung (21) versehen ist, um eine Bruchzone (20) zu bilden, wobei in Übereinstimmung mit der Bruchzone (20) ein klappbar Gelenk (7a) für die Lenksäule (7) angeordnet ist.

17. Pedaleinheit gemäß Anspruch 16, dadurch gekennzeichnet, dass die Stütze (23) des Hilfsaufbaus (22) mit dem Profilteil (6) zwischen der Basis (3) und der Bruchzone (20) verbunden ist.

18. Pedaleinheit gemäß Anspruch 16 oder 17, dadurch gekennzeichnet, dass die Abschwächeinrichtung zumindest eine Öffnung (21) enthält, die in beiden Seitenwänden (9, 10) des Profilteils (6) ausgebildet ist.

19. Pedaleinheit gemäß Anspruch 18, dadurch gekennzeichnet, dass die Abschwächeinrichtung von einer Reihe von im wesentlichen parallelen Schlitzen (21) gebildet wird, die in beiden Seitenwänden (9, 10) des Profilteils (6) ausgebildet sind, wobei die Länge dieser Schlitze (21) von der Rückwand (8) des Profilteils (6) zu den Rändern der Seitenwände (9, 10) gegenüber der Rückwand (8) zunimmt.

20. Pedaleinheit gemäß Anspruch 19, dadurch gekennzeichnet, dass die Schlitze (21) im wesentlichen V-förmig ausgebildet sind, wobei der Scheitel der Rückwand (8) des Profilteils (6) gegenüberliegt, so dass die Seitenwände (9, 10) des Profilteils (6) in der Bruchzone (20) von einer Vielzahl von gegenseitig beabstandeten Winkelstreifen (21a) gebildet werden.

21. Pedaleinheit gemäß Anspruch 9, dadurch gekennzeichnet, dass ein Teil des Profilteils (6) zwischen der Basis (3) und der Bruchzone (20) mit einem gemeinsam aufgebauten Versteifungselement (28) versehen ist.

22. Pedaleinheit gemäß Anspruch 21, dadurch gekennzeichnet, dass das Versteifungselement (28) zwei Platten (28a, 28b) enthält, die in einem X-förmigen Aufbau angeordnet sind, wobei beide Platten senkrecht zur Rückwand (8) des Profilteils (6) liegen.

## Revendications

1. Ensemble de pédales pour véhicule à moteur, comportant une base de support (3) à partir de laquelle fait saillie une structure allongée (4) qui peut recevoir au moins une partie de la colonne de direction (7) du véhicule à moteur, la structure allongée (4) comportant une partie de liaison (5) adjacente à la base pour supporter un axe d'articulation (13) d'au moins une des pédales (14, 15, 16), dans lequel la base (3) et la structure allongée (4) sont constituées en un seul bloc à partir d'une matière plastique,
caractérisé en ce que la structure allongée (4) fait saillie à partir d'une partie pratiquement centrale de la base (3).

2. Ensemble de pédales selon la revendication 1, caractérisé en ce que la matière plastique est un polymère thermoplastique renforcé de fibres et l'ensemble est réalisé par un procédé de moulage.

3. Ensemble de pédales selon la revendication 2, caractérisé en ce que le polymère thermoplastique est du polyamide 6 ou 66 et les fibres de renforcement sont des fibres de verre constituant 30 à 50 % en poids.

4. Ensemble de pédales selon la revendication 1, caractérisé en ce que la structure allongée (4) comporte une partie profilée (6) ayant une section transversale en forme de U qui définit un siège en forme de canal pour la partie de colonne de direction (7).

5. Ensemble de pédales selon la revendication 4, caractérisé en ce que la partie profilée (6) comporte une paire de parois latérales (9, 10) reliées l'une à l'autre par une paroi dorsale pratiquement plate (8).

6. Ensemble de pédales selon la revendication 5, caractérisé en ce que les parois latérales ont des brides de fixation venues de matière (9a, 10a).

7. Ensemble de pédales selon la revendication 6, caractérisé en ce qu'il comporte une pédale de frein (15) interposée entre une pédale d'embrayage (14) et une pédale d'accélérateur (16), les parois latérales (9, 10) de la partie profilée (6) étant reliées à une paire d'éléments latéraux de renforcement (9b, 10b) et à des parois de base (11, 12) de manière à former une paire de structures d'étrier en forme de boîte principale proche de la partie de liaison (5) pour supporter un axe d'articulation (13) de la pédale de frein (15).

8. Ensemble de pédales selon la revendication 7, caractérisé en ce que la base (3) a un trou traversant (3b) en correspondance avec la pédale de frein (15) pour coopérer avec une partie d'un dispositif de servofrein.

9. Ensemble de pédales selon la revendication 7 ou 8, caractérisé en ce qu'une structure auxiliaire (22) venue de matière avec la base (3) et avec une paroi latérale (9) de la partie profilée (6) s'étend le long de la partie profilée (6), la structure auxiliaire constituant une structure auxiliaire d'étrier en forme de boîte (23, 23a, 24) proche de la partie de liaison (5) pour supporter une extrémité de l'axe d'articulation (13) de la pédale de frein (15).

10. Ensemble de pédales selon la revendication 9, caractérisé en ce que la structure auxiliaire (22) est une structure ouverte qui comporte un montant latéral (23) fixé à une extrémité sur la base (3) et relié à son extrémité opposée à la partie profilée (6) de la structure allongée (4) et à au moins une plaque transversale intermédiaire (25).

11. Ensemble de pédales selon la revendication 10, caractérisé en ce que la structure auxiliaire (22) supporte un élément d'actionnement (27) relié par des moyens de transmission à un mécanisme de libération destiné à déverrouiller le capot avant du véhicule à moteur.

12. Ensemble de pédales selon la revendication 11, caractérisé en ce que l'élément d'actionnement est un levier pivotant (27) articulé sur le montant latéral (23) de la structure auxiliaire (22).

13. Ensemble de pédales selon la revendication 9 ou 10, caractérisé en ce que à la fois la pédale d'embrayage et la pédale de frein (14, 15) sont articulées sur un axe d'articulation commun (13) supporté par les structures de support principale et auxiliaire formant étrier (9, 9b, 12, 10, 10b, 23, 23a, 24).

14. Ensemble de pédales selon la revendication 13, caractérisé en ce que chacune parmi les structures de support principale et auxiliaire formant étrier (9, 9b, 12, 10, 10b, 23, 23a, 24) est constituée par l'intermédiaire d'une structure en boîte ouverte sur son côté opposé à la paroi dorsale (8).

15. Ensemble de pédales selon la revendication 13 ou 14, caractérisé en ce que la base (3) comporte de plus une paire de pattes venues de matière (18) destinées à la liaison articulée de la pédale d'accélérateur (16).

16. Ensemble de pédales selon la revendication 6, caractérisé en ce que la structure allongée (4) a une partie munie de moyens d'affaiblissement (21) pour définir une zone pouvant être écrasée (20) en correspondance avec laquelle on prévoit de positionner un joint d'articulation pouvant être écrasé (7a) de la colonne de direction (7).

17. Ensemble de pédales selon la revendication 16, caractérisé en ce que le montant (23) de la structure auxiliaire (22) est relié à la partie profilée (6) entre la base (3) et la zone pouvant être écrasée (20).

18. Ensemble de pédales selon la revendication 16 ou 17, caractérisé en ce que les moyens d'affaiblissement comportent au moins une ouverture (21) formée dans les deux parois latérales (9, 10) de la partie profilée (6).

19. Ensemble de pédales selon la revendication 18, caractérisé en ce que les moyens d'affaiblissement sont formés par l'intermédiaire d'une série de fentes pratiquement parallèles (21) formées dans les deux parois latérales (9, 10) de la partie profilée (6), ces fentes (21) ayant une longueur croissante à partir de la paroi dorsale (8) de la partie profilée (6) en direction des bords des parois latérales (9, 10) opposés à la paroi dorsale (8).

20. Ensemble de pédales selon la revendication 19, caractérisé en ce que les fentes (21) ont une forme pratiquement de V, le sommet étant dirigé vers la paroi dorsale (8) de la partie profilée (6) de sorte que, dans la zone pouvant être écrasée (20), les parois latérales (9, 10) de la partie profilée (6) sont définies par plusieurs bandes inclinées mutuellement espacées (21a).

21. Ensemble de pédales selon la revendication 9, caractérisé en ce qu'une partie de la partie profilée (6) intermédiaire entre la base (3) et la zone pouvant être écrasée (20) est munie d'un élément de raidissement venu de matière (28).

22. Ensemble de pédales selon la revendication 21, caractérisé en ce que l'élément de raidissement (28) est constitué de deux plaques (28a, 28b) situées selon une configuration en X, les deux étant perpendiculaires à la paroi dorsale (8) de la partie profilée (6).
